# EUROPÄISCHE PATENTANMELDUNG

(11) **EP 1 655 251 A1**
(43) Veröffentlichungstag der Anmeldung: **10.05.2006**
(21) Anmeldenummer: 05021466.7
(22) Anmeldetag: 30.09.2005
(51) Int. Cl.: B65G 59/08, B65G 65/23

(54) **Vorrichtung zur automatisierten Entladung von Gepäckwagen auf Flughäfen**

(30) Priorität: 03.11.2004 DE 102004053081
(71) Anmelder: Grenzebach Onero GmbH, 86663 Asbach-Bäumenheim (DE)
(72) Erfinder: Fuchs, Wilfried, 75217 Birkenfeld (DE); Thiele, Günter, 76327 Pfinztal/Solingen (DE); Kohl, Martin, 69469 Weinheim (DE)
(74) Vertreter: Gallo, Wolfgang

(57) **Zusammenfassung**

Vorrichtung zum automatischen Entladen von Gepäckwagen mit einer Kippeinrichtung (2) zum seitlichen Kippen des Gepäckwagens (6) und einer der Kippeinrichtung zugeordneten, den gekippten Gepäckwagen abstützenden Wand (7), sowie mit einer Hubeinrichtung zum fortschreitenden Anheben des gekippten Gepäckwagens relativ zu der Wand, so daß die Gepäckstücke schichtweise über die Wandoberkante auf eine Abfördereinrichtung (4) abrutschen können.

## Beschreibung

Die Erfindung betrifft eine Vorrichtung zur automatisierten Entladung von Gepäckwagen. Solche Gepäckwagen werden auf Flughäfen zum Transport von Gepäckstücken zwischen den Flugzeugen und den Gepäckabfertigungsanlagen verwendet.

Die Gepäckwagen werden hierbei durch eine Zugmaschine entweder einzeln oder in einem Zugverbund transportiert.

Die im Flugzeug transportierten Gepäckstücke werden am Flugzeug auf einen Gepäckwagen geladen und in den Gepäckabfertigungsbereich des Flughafens transportiert. Dort werden die Gepäckwagen entladen und die Gepäckstücke werden, zumindest bei Flughäfen ab einer bestimmten Größenordnung, auf fördertechnische Einrichtungen gelegt und mit diesen weiter transportiert, z.B. zur Gepäckausgabe an den Passagier.

Entsprechend erfolgt der Transport von abfliegendem Gepäck von dem Gepäckabfertigungsbereich des Flughafens zum Flugzeug.

Bisher erfolgt die Entladung der Gepäckwagen manuell. Diese Verfahrensweise erfordert einen hohen Einsatz von Personal und für das eingesetzte Personal einen erheblichen Kraftaufwand mit der entsprechenden Gefahr von kurz- und langfristigen gesundheitlichen Beeinträchtigungen.

Zur Vermeidung der hohen körperlichen Belastung und zur Beschleunigung der Abfertigungsprozesse am Flughafen wäre es daher von Vorteil, die Entladung der Gepäckwagen zu automatisieren.

In den Schriften DE 100 15 778 und DE 101 58 092 sind Verfahren und Vorrichtungen beschrieben, die eine automatisierte Entladung von Gepäckwagen und Gepäckcontainem, sowohl bei der Einzelanlieferung als auch bei einer Anlieferung in einem Zugverband, ermöglichen. Hierbei werden die Gepäckwagen auf eine Entladestation gefahren und auf dieser seitlich gekippt, so dass die Gepäckstücke auf ein seitlich angeordnetes Förderband oder ein Gleitblech rutschen und von diesem aus über weitere fördertechnische Einrichtungen weitertransportiert werden.

Zur Vermeidung eines unkontrollierten Abrutschens der Gepäckstücke aus dem Gepäckwagen sind die bekannten Vorrichtungen jeweils mit einer beweglichen Lamellenwand versehen, die das Herausrutschen der Gepäckstücke verhindert. Diese Lamellenwand wird hierbei kontrolliert abgesenkt, so dass die Gepäckstücke schichtweise freigegeben und abtransportiert werden.

Nachteilig an den bekannten Vorrichtungen ist, dass der Einsatz einer beweglichen Lamellenwand dazu führen kann, dass sich Gepäckstücke, die durch die Kippstellung des Gepäckwagens gegen die Lamellenwand gepresst werden, verhaken können und hierdurch gegebenenfalls beschädigt werden können. Des weiteren müssen die abführenden Förderbänder oder Gleitbleche höhenverstellbar ausgeführt sein, um einen Höhensprung zwischen der Oberkante der Lamellenwand und den Abfördereinrichtungen zu vermeiden, der gegebenenfalls zu Fehlfunktionen beim Abtransport oder Gepäckbeschädigungen führen könnte. Ein weiterer Nachteil der beschriebenen Vorrichtungen ist, dass die Lamellenwand beim Absenken einen zusätzlichen Platzbedarf im Bodenbereich erfordert.

Ausgehend von diesem Stand der Technik ist es die Aufgabe der Erfindung, eine Vorrichtung anzugeben, die gemäß den oben beschriebenen Kippverfahren arbeitet, hierbei aber die automatisierte Entladung der Gepäckwagen in einfacherer, sicherer und gepäckschonender Art realisiert.

Diese Aufgabe wird durch die Anordnung nach Anspruch 1 gelöst.

Weitere vorteilhafte Ausgestaltungen und Verbesserungen der Erfindung sind Gegenstand der Unteransprüche.

Bei der erfindungsgemäßen Vorrichtung ist neben dem seitlichen Kippen des Gepäckwagens auch eine Höhenbewegung des Gepäckwagens vorgesehen.

Das unkontrollierte Abrutschen der Gepäckstücke wird dabei dadurch verhindert, dass die Gepäckstücke nach dem Kippen des Gepäckwagens gegen eine zu der Vorrichtung gehörige Wand rutschen. Diese Wand verfügt in einer gewissen Höhe über eine Öffnung, so dass durch ein schrittweises oder allmähliches Anheben des gekippten Gepäckwagens nach und nach Gepäckstücke durch die Öffnung in der Wand gleiten können. Zum weiteren Abtransport ist in Höhe der Wandöffnung eine Abfördereinrichtung vorgesehen, deren anderes Ende die Verbindung zu der Gepäckförderanlage des Flughafens herstellt.

Anhand der beigefügten Zeichnungen werden die Erfindung einschließlich vorteilhafter Ausgestaltungen und Verbesserungen und der Einsatz der Vorrichtung näher erläutert. In den Zeichnungen zeigt:

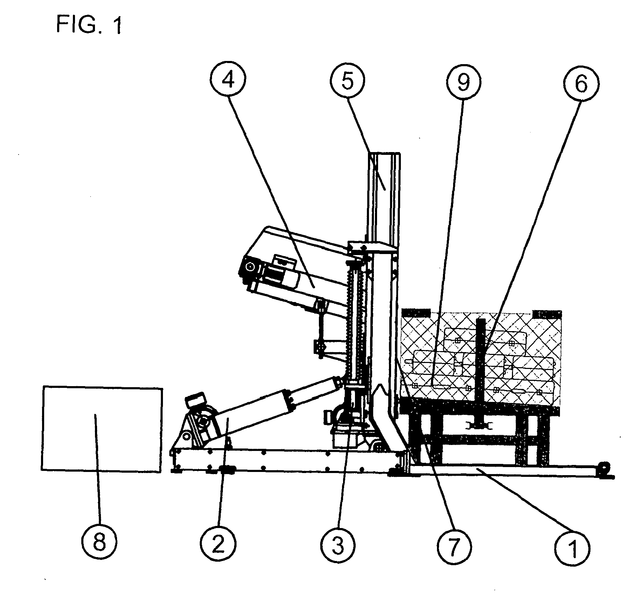

- Fig. 1: die Entladevorrichtung in stimseitiger Ansicht in Ausgangsposition mit einem Gepäckwagen,
- Fig. 2: die Entladevorrichtung in Seitenansicht,
- Fig. 3: die Entladevorrichtung in stirnseitiger Ansicht während des Entladevorgangs

Die Entladevorrichtung besteht aus einem befahrbaren Hubschlitten 1, auf der ein zur Entladung vorgesehener Gepäckwagen 6 abgestellt wird. Der Transport des Gepäckwagens kann entweder manuell, mit Hilfe eines Zugfahrzeugs oder in einer weiteren Ausbauvariante automatisch erfolgen. In einer vorteilhaften Ausführung ist der Hubschlitten 1 so ausgeführt, dass entweder der gesamte Hubschlitten oder Teile des Hubschlittens in Seitenrichtung beweglich ausgeführt sind. Hierdurch wird erreicht, dass bei der Kippbewegung der Entladevorrichtung der Gepäckwagen gegen die seitliche Wand 7 bewegt wird und ein Herabfallen von Gepäckstücken zwischen dem Gepäckwagen 6 und der Wand 7 verhindert wird.

Der Hubschlitten 1 kann mittels eines Antriebs 2 entlang der Hubsäule 5 nach oben und unten bewegt werden. Als Antriebe können gängige Prinzipien wie elektromechanische Systeme (Ketten- oder Riemenantriebe, Elektrozylinder, Spindelhubgetriebe) oder hydraulische Systeme eingesetzt werden.

Die Hubsäule 5 ist drehbar gelagert und kann über einen Antrieb 3 seitlich gekippt werden. Hierbei hat sich ein Kippwinkel von 30-35 Grad als vorteilhaft erwiesen. Auch für diese Bewegung können elektro-mechanische oder hydraulische Antriebe vorgesehen werden.

Weiterhin verfügt die Vorrichtung über eine Abfördereinrichtung 4, die die von dem Gepäckwagen abrutschenden Gepäckstücke übernimmt und zu einem zur Gepäckförderanlage des Flughafens gehörenden Förderband 8 befördert. Die Abfördereinrichtung kann als Rutschblech oder, in bevorzugter Ausführung als Förderband ausgelegt sein. Als weitere Verbesserung der Vorrichtung kann die Abfördereinrichtung hierbei aus mehreren nebeneinander angeordneten Förderbändern bestehen, die einzeln ansteuerbar mit unterschiedlichen Geschwindigkeiten einen kontrollierbaren Gepäckstrom realisieren.

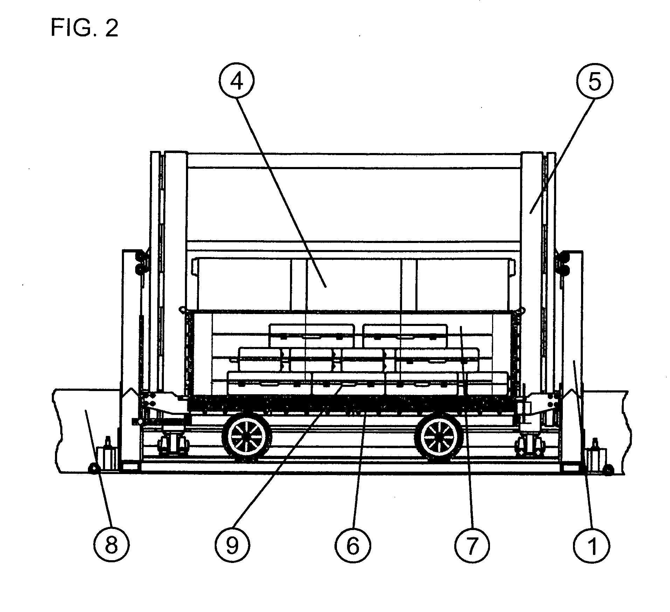

Zur weiteren Verdeutlichung zeigt Fig. 2 die Vorrichtung in Seitenansicht. Durch die Kippbewegung werden der Gepäckwagen 6 und die Gepäckstücke gegen die Wand 7 gedrängt. Durch die Anhebung des Gepäckwagens erreichen die Gepäckstücke die Oberkante der Wand 7 und rutschen dann über die Wand 7 auf die Abfördereinrichtung 4. In einer bevorzugten Ausführung besteht die Wand 7 aus einem Förderband, das sich in gleicher Richtung und Geschwindigkeit wie der Gepäckwagen nach oben bewegt. In diesem Fall ergibt sich keine Relativbewegung zwischen der Wand 7 und den sich nach oben bewegenden Gepäckstücken, was die Gefahr von Verklemmungen oder Beschädigungen weiter deutlich reduziert und erheblich zur Gepäckschonung beiträgt.

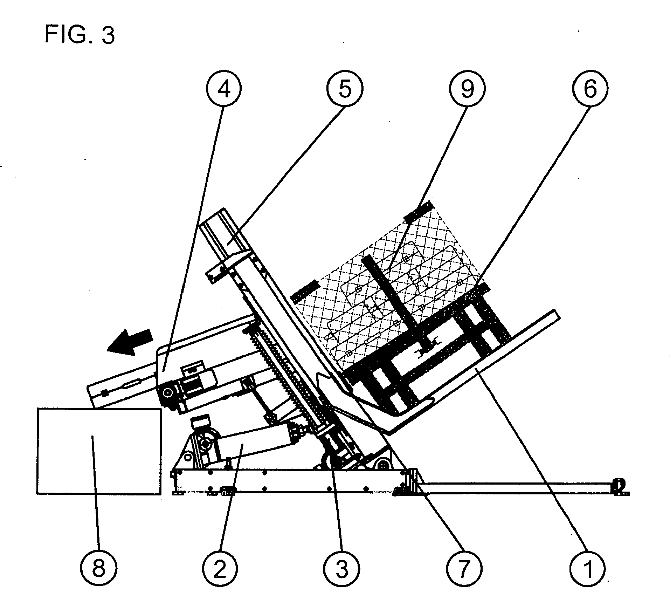

Fig. 3 zeigt die Vorrichtung während des Entladevorganges. Der Hubschlitten 1 ist hierbei so weit angehoben, dass die Gepäckstücke 9 sich über der Oberkante der Wand 7 befinden und auf die Abfördereinrichtung 4 rutschen. Die Länge der Abfördereinrichtung 4 ist hierbei so gewählt, dass das freie Ende der Abfördereinrichtung 4 das Übernahmeband 8 erreicht. Somit können die Gepäckstücke direkt in die Gepäckförderanlage des Flughafens eingebracht werden. Die Höhe der Abfördereinrichtung in gekippter Stellung bzw. der Neigungswinkel, mit der die Gepäckstücke über die Abfördereinrichtung transportiert werden, ist in der bevorzugten Ausführung variierbar und einstellbar.

### Bezugszeichenliste

- 1: Hubschlitten
- 2: Kippantrieb
- 3: Hubantrieb
- 4: Abfördereinrichtung
- 5: Hubsäule
- 6: Gepäckwagen
- 7: Wand (mit integriertem Förderband)
- 8: Übernahmeband
- 9: Gepäckstück

## Patentansprüche

1. Vorrichtung zum automatisierten Entladen von Gepäckwagen, mit einer Kippeinrichtung (1, 2) zum seitlichen Kippen des beladenen Gepäckwagens (6), weiter mit einer der Kippeinrichtung (1, 2) zugeordneten Wand (7), welche den gekippten Gepäckwagen und die darauf befindlichen Gepäckstücke seitlich abstützt, und mit einer Abfördereinrichtung (4) zur Übernahme der über die Oberkante der Wand (7) abgerutschten Gepäckstücke,
**dadurch gekennzeichnet, daß** die Wand (7) mit ihrer Oberkante höhenpositionsmäßig feststehend angeordnet ist und dass die Kippeinrichtung eine ihr zugeordnete und mit ihr zusammen kippbewegliche Hubvorrichtung (3) mit einem Hubschlitten (1) aufweist, der den Gepäckwagen (6) aufnimmt und dem gekippten Gepäckwagen relativ zu der Wand zum Entladen fortschreitend anhebt.

2. Vorrichtung nach Anspruch 1, **dadurch gekennzeichnet, daß** die Wand (7) durch ein Förderband gebildet ist, das sich mit gleicher Geschwindigkeit und Richtung wie der Gepäckwagen (6) auf dem Hubschlitten (1) aufwärts bewegt, derart, daß die durch das Förderband gebildete Wandfläche relativ zu den Gepäckstücken auf dem der Anhebebewegung unterliegenden Gepäckwagen feststehend bleibt.

3. Vorrichtung nach Anspruch 1 oder 2, **dadurch gekennzeichnet, daß** der Hubschlitten (1) oder ein den Gepäckwagen (6) aufnehmender Teil desselben mit den darauf abgestellten Gepäckwagen (6) außerdem seitwärts relativ zu der Wand (7) beweglich ist, um den Gepäckwagen (6) mit den darauf befindlichen Gepäckstücken in Anlage an die Wand (7) zu bringen.

4. Vorrichtung nach einem der Ansprüche 1 bis 3, **dadurch gekennzeichnet, daß** die Abfördereinrichtung (4) aus zwei oder mehr nebeneinander angeordneten Förderbändern aufgebaut ist, die einzeln ansteuerbar und mit unterschiedlichen Geschwindigkeiten antreibbar sind.

5. Vorrichtung nach einem der Ansprüche 1 bis 3, **dadurch gekennzeichnet, daß** die Höhenposition und/oder der Neigungswinkel der Abfördereinrichtung (4) mit Bezug auf die gekippte Kippeinrichtung (2) einstellbar und veränderbar ist.
